# EUROPÄISCHE PATENTANMELDUNG

(11) **EP 2 014 441 A2**
(43) Veröffentlichungstag der Anmeldung: **14.01.2009**
(21) Anmeldenummer: 08011755.9
(22) Anmeldetag: 28.06.2008
(51) Int. Cl.: B29C 45/14, B65D 75/00

(54) **Verfahren zur Herstellung eines Formteils mit Barriereeigenschaften aus Kunststoff**

(30) Priorität: 09.07.2007 EP 07013382
(71) Anmelder: Oberhofer, Kurt, 69259 Wilhelmsfeld (DE); Oberhofer, Timm, 69259 Wilhelmsfeld (DE)
(72) Erfinder: Oberhofer, Kurt, 69259 Wilhelmsfeld (DE); Oberhofer, Timm, 69259 Wilhelmsfeld (DE)
(74) Vertreter: Meyer-Roedern, Giso

(57) **Zusammenfassung**

Aus einer Verbundfolie, die eine Barriereschicht (10) und wenigstens eine äußere Schicht (12) aus siegelfähigem Kunststoff hat, wird mit einem Vorformungsgrad von 60 % bis 95 % ein Formkörper hergestellt, dessen Kontur der einer Wandpartie des Hohlraums in einem Werkzeug der Kunststoff-Spritzgußtechnik wenigstens abschnittsweise nicht entspricht. Der Formkörper wird mit der Schicht aus siegelfähigem Kunststoff nach innen in das Formwerkzeug eingelegt. Das Formwerkzeug wird mit in verformbarem, siegelfähigen Zustand befindlichem Kunststoff beschickt und nach Erhärten des Kunststoffs das mit der angesiegelten, in Endform gebrachten Verbundfolie versehene Formteil aus dem Formwerkzeug entnommen.

## Beschreibung

Die Erfindung betrifft ein Verfahren zur Herstellung eines Formteils mit Barriereeigenschaften aus Kunststoff, bei dem aus einer Verbundfolie, die eine Barriereschicht und wenigstens eine äußere Schicht aus siegelfähigem Kunststoff hat, ein Formkörper vorgeformt wird, der Formkörper mit der Schicht aus siegelfähigem Kunststoff nach innen in ein Formwerkzeug der Kunststoff-Spritzgußtechnik eingelegt, das Formwerkzeug mit in verformbarem, siegelfähigen Zustand befindlichem Kunststoff beschickt und nach Erhärten des Kunststoffs das mit der angesiegelten Verbundfolie versehene Formteil aus dem Formwerkzeug entnommen wird.

Ein solches Verfahren ist aus der US 3 700 018 A, JP 03 001 917 A, JP 05 301 249 A, JP 11 105 067 A, DE 100 53 050 A1 bekannt. Es geht hier durchweg um die Herstellung von Formteilen, deren dreidimensionale Form und Gestalt einfach ist und herstellungstechnisch keine besonderen Schwierigkeiten bereitet.

Aus der Praxis sind Getränkebehälter in Form von Schlauchbeuteln aus Kunststoff und quaderförmigen Packs aus kunststoffbeschichtetem Karton bekannt. Oft sind solche Behälter mit einem Schraub- oder Kronkorkenverschluß versehen.

Wie eingangs der DE 10 2004 022 375 A1 dargetan, haben herkömmliche Schlauchbeutel unzureichende Barriereeigenschaften, da in aller Regel nur der Schlauchbeutelkörper mit einer Barriereschicht versehen ist. Das an den Schlauchbeutelkörper angesiegelte und/oder darin eingesiegelte Boden- bzw. Schulterteil des Schlauchbeutels besteht hingegen zumeist aus einem herkömmlichen Kunststoff, der keine Barriereeigenschaften hat.

Die DE 10 2004 022 375 A1 schlägt vor, das tiefgezogene Boden- bzw. Schulterteil eines Schlauchbeutels mit einer Barriereschicht zu versehen, für die ein Laminat mit Aluminiumfolie zwischen siegelfähigen Kunststofflagen erwähnt ist. Wie das tiefgezogene Boden- bzw. Schulterteil mit einer derartigen Barriereschicht versehen werden könnte, bleibt in der DE 10 2004 022 375 A1 offen.

Aufgabe der Erfindung ist es, ein technisch und wirtschaftlich praktikables Herstellungsverfahren für ein dreidimensional komplex gestaltetes Formteil mit Barriereeigenschaften aus Kunststoff zu schaffen. Speziell, aber nicht ausschließlich geht es um die Herstellung eines Boden- und/oder Schulterteils mit Barriereeigenschaften für einen Getränkebehälter z. B. in Form eines Schlauchbeutels, quaderförmigen Packs aus kunststoffbeschichtetem Karton u. a. m.

Bei dem diese Aufgabe lösenden Verfahren wird aus einer Verbundfolie, die eine Barriereschicht und wenigstens eine äußere Schicht aus siegelfähigem Kunststoff hat, ein Formkörper mit einem Vorformungsgrad von 60 % bis 95 % in einer Kontur vorgeformt, die wenigstens abschnittsweise nicht der Kontur einer Wandpartie des Hohlraums in dem Formwerkzeug der Kunststoff-Spritzgußtechnik entspricht. Der in das Formwerkzeug eingelegte Formkörper kommt im Abstand vor dieser Wandpartie zu liegen. Er wird beim Beschicken des Formwerkzeugs mit dem Kunststoff durch Druck und Erwärmung in Anlage mit der Wandpartie und in Endform gebracht.

Die Erfindung sieht vor, den Formkörper aus der Verbundfolie nur vorzuformen und durch entsprechende Steuerung von Druck, Temperatur und Materialfluß beim Ausspritzen des Formwerkzeugs in seine Endform zu bringen. Dadurch lassen sich Formteile mit Barriereeigenschaften aus Kunststoff von bislang unerreicht komplexer Gestalt herstellen. Die an die Formteile angespritzte Verbundfolie ist rißfrei und faltenarm.

Bei einer bevorzugten Ausführungsform wird der Formkörper aus der Verbundfolie durch Tiefziehen vorgeformt.

Bei einer bevorzugten Ausführungsform wird der Formkörper aus einem einzigen Stück Verbundfolie hergestellt.

Bei einer alternativ bevorzugten Ausführungsform wird der Formkörper aus mehreren Stücken Verbundfolie hergestellt, die am Rand miteinander versiegelt werden, und zwar vorzugsweise durch Thermosiegeln, Ultraschallschweißen oder Hochfrequenzschweißen.

Bei einer bevorzugten Ausführungsform wird die Verbundfolie nach dem Tiefziehen beschnitten.

Bei einer bevorzugten Ausführungsform wird aus der Verbundfolie ein vor der Innenwand oder Außenwand des Hohlraums in dem Formwerkzeug liegender Formkörper hergestellt.

Bei einer bevorzugten Ausführungsform wird Verbundfolie mit einer mittleren Barriereschicht und beidseitigen äußeren Schichten aus Kunststoff verwendet, von denen wenigstens eine siegelfähig ist. Für die Barriereschicht ist Aluminiumfolie, und für die siegelfähige äußere Schicht Polyethylen (PE) oder Polypropylen (PP) bevorzugt.

Nach dem erfindungsgemäßen Verfahren kann unter anderem das Boden-und/oder Schulterteil eines Getränkebehälter mit Schraub- oder Kronkorkenverschluß hergestellt werden, beispielsweise in Form eines Schlauchbeutels, quaderförmigen Packs aus kunststoffbeschichtetem Karton u. a. m. An das Boden- und/oder Schulterteil wird ein Behältermantel angesiegelt, der aus Kunststoff mit Barriereeigenschaften oder einer Barriereschicht besteht, und zwar vorzugsweise durch Thermosiegeln, Ultraschallschweißen oder Hochfrequenzschweißen.

Die Erfindung wird im folgenden anhand von Beispielen näher erläutert.

### Beispiel 1

Für die Herstellung des Bodenteils eines Schlauchbeutels wird ein Formkörper, der aus einem einzigen tiefgezogenen Stück Folienzuschnitt einer Verbundfolie besteht, in ein Formwerkzeug der Kunststoff-Spritzgußtechnik eingelegt. Die Verbundfolie hat als Barriereschicht einen Kern aus Aluminiumfolie, der beidseits mit foliendicken Schichten aus mikrogeschäumtem Polypropylen (PP) beschichtet ist. Der Formkörper ist ausgehend von einem flachen Rohling durch das Tiefziehen mit einem Vorformungsgrad von 60 % bis 95 % vorgeformt. Das Formwerkzeug wird mit heißem, flüssigen Polypropylen (PP) ausgespritzt und dadurch der Formkörper aus der Verbundfolie in seine Endform gebracht. Nach Erhärten des Kunststoffs wird das fertige Bodenteil aus dem Formwerkzeug entnommen. Das Bodenteil hat eine vollflächige Barriereinnen-oder -außenschicht, die aus der angesiegelten Verbundfolie besteht. Das Bodenteil wird in den Schlauchbeutelkörper des Schlauchbeutels eingesiegelt.

### Beispiel 2

Für die Herstellung des Schulterteils eines Schlauchbeutels wird ein Formkörper, der aus zwei tiefgezogenen Stücken Zuschnitt einer Verbundfolie besteht, in ein Formwerkzeug der Kunststoff-Spritzgußtechnik eingelegt. Die Verbundfolie hat als Barriereschicht einen Kern aus Aluminiumfolie, der beidseits mit foliendicken Schichten aus mikrogeschäumtem Polypropylen (PP) beschichtet ist. Die beiden tiefgezogenen Stücke Zuschnitt sind am Rand miteinander versiegelt. Der Formkörper ist ausgehend von einem flachen Rohling durch das Tiefziehen mit einem Vorformungsgrad von 60 % bis 95 % vorgeformt. Das Formwerkzeug wird mit heißem, flüssigen Polypropylen (PP) ausgespritzt und dadurch der Formkörper aus der Verbundfolie in seine Endform gebracht. Nach Erhärten des Kunststoffs wird das fertige Schulterteil aus dem Formwerkzeug entnommen. Das Schulterteil hat eine vollflächige Barriereinnen- oder -außenschicht, die aus der angesiegelten Verbundfolie besteht. Das Schulterteil wird in den Schlauchbeutelkörper des Schlauchbeutels eingesiegelt.

### Beispiel 3

Wie Beispiel 1 und Beispiel 2 mit der Maßgabe, daß Boden- und Schulterteil in den Schlauchbeutelkörper des Schlauchbeutels eingesiegelt werden.

Die Erfindung wird im folgenden anhand der Zeichnung näher erläutert. Es zeigen:

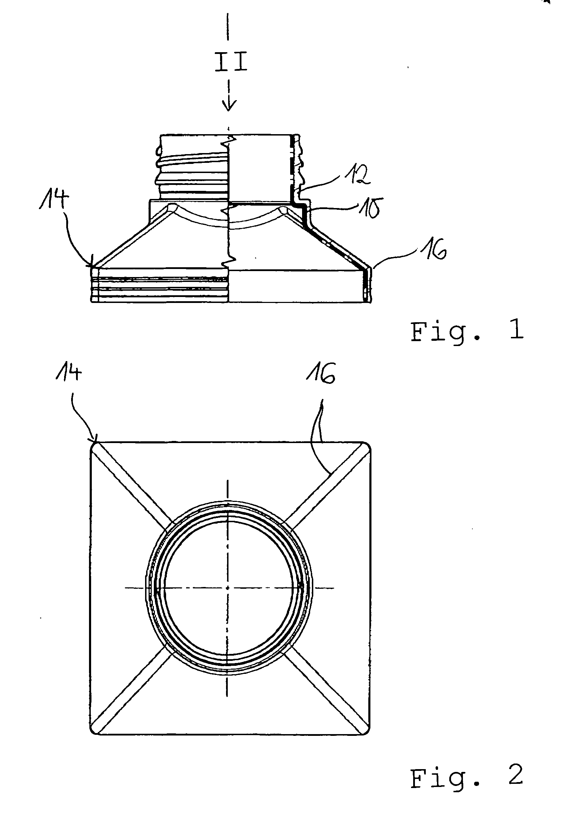

- Fig. 1: die Seitenansicht eines nach dem erfindungsgemäßen Verfahren hergestellten Schulterteils mit Schraubverschluß für ein quaderförmiges Pack aus kunststoffbeschichtetem Karton, halbseitig im Schnitt;
- Fig. 2: eine Draufsicht auf das Schulterteil mit Blick in Richtung II von Fig. 1;

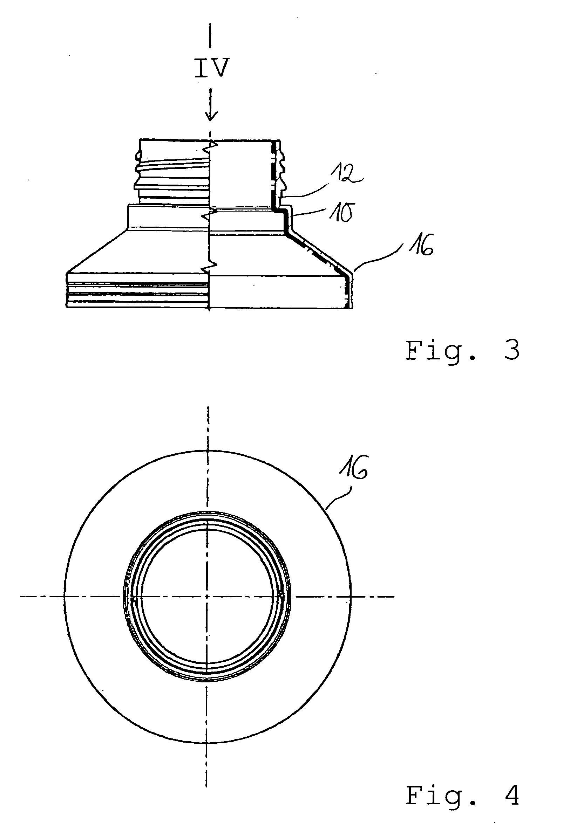

- Fig. 3: die Seitenansicht eines nach dem erfindungsgemäßen Verfahren hergestellten Schulterteils mit Schraubverschluß für eine Schlauchbeutelverpackung aus Kunststoff, halbseitig im Schnitt; und
- Fig. 4: eine Draufsicht auf das Schulterteil mit Blick in Richtung IV von Fig. III.

Die in der Zeichnung dargestellten Schulterteile haben eine komplexe dreidimensionale Gestalt. Von der außen angespritzten Verbundfolie erkennt man eine innere Barriereschicht 10 aus Aluminium und eine äußere Schicht 12 aus Kunststoff.

Besondere Schwierigkeiten, die Barriereschicht 10 dicht zu bekommen, bestehen an den Ecken 14 und Kanten 16 der Schulterteile. Die angespritzte Verbundfolie ist rißfrei und faltenarm.

### Bezugszeichenliste

- 10: Barriereschicht
- 12: äußere Schicht
- 14: Ecke
- 16: Kante

## Patentansprüche

1. Verfahren zur Herstellung eines Formteils mit Barriereeigenschaften aus Kunststoff, bei dem aus einer Verbundfolie, die eine Barriereschicht (10) und wenigstens eine äußere Schicht (12) aus siegelfähigem Kunststoff hat, ein Formkörper vorgeformt wird, der Formkörper mit der Schicht (12) aus siegelfähigem Kunststoff nach innen in ein Formwerkzeug der Kunststoff-Spritzgußtechnik eingelegt, das Formwerkzeug mit in verformbarem, siegelfähigen Zustand befindlichem Kunststoff beschickt und nach Erhärten des Kunststoffs das mit der angesiegelten Verbundfolie versehene Formteil aus dem Formwerkzeug entnommen wird, **dadurch gekennzeichnet, daß** der Formkörper mit einem Vorformungsgrad von 60 % bis 95 % in einer Kontur vorgeformt wird, die wenigstens abschnittsweise nicht der Kontur einer Wandpartie des Hohlraums in dem Formwerkzeug entspricht, und daß der in das Formwerkzeug eingelegte Formkörper im Abstand vor dieser Wandpartie zu liegen kommt und beim Beschicken des Formwerkzeugs mit dem Kunststoff durch Druck und Erwärmung in Anlage mit der Wandpartie und in Endform gebracht wird.

2. Verfahren nach Anspruch 1, **dadurch gekennzeichnet, daß** der Formkörper durch Tiefziehen vorgeformt wird.

3. Verfahren nach Anspruch 1 oder 2, **dadurch gekennzeichnet, daß** der Formkörper aus einem einzigen Stück Verbundfolie hergestellt wird.

4. Verfahren nach Anspruch 1 oder 2, **dadurch gekennzeichnet, daß** der Formkörper aus mehreren Stücken Verbundfolie hergestellt wird, die am Rand miteinander versiegelt werden, und zwar vorzugsweise durch Thermosiegeln, Ultraschallschweißen oder Hochfrequenzschweißen.

5. Verfahren nach einem der Ansprüche 2 bis 4, **dadurch gekennzeichnet, daß** die Verbundfolie nach dem Tiefziehen beschnitten wird.

6. Verfahren nach einem der Ansprüche 1 bis 5, **dadurch gekennzeichnet, daß** aus der Verbundfolie ein vor der Innenwand des Hohlraums in dem Formwerkzeug liegender Formkörper hergestellt wird.

7. Verfahren nach einem der Ansprüche 1 bis 5, **dadurch gekennzeichnet, daß** aus der Verbundfolie ein vor der Außenwand des Hohlraums in den Formwerkzeug liegender Formkörper hergestellt wird.

8. Verfahren nach einem der Ansprüche 1 bis 7, **dadurch gekennzeichnet, daß** Verbundfolie mit einer mittleren Barriereschicht und beidseitigen äußeren Schichten (12) aus Kunststoff verwendet wird, von denen wenigstens eine siegelfähig ist.

9. Verfahren nach Anspruch 8, **dadurch gekennzeichnet, daß** Verbundfolie mit einer Barriereschicht (10) aus Aluminiumfolie verwendet wird.

10. Verfahren nach Anspruch 8 oder 9, **dadurch gekennzeichnet, daß** Verbundfolie mit einer äußeren Schicht (12) aus siegelfähigem Polyethylen (PE) oder siegelfähigem Polypropylen (PP) verwendet wird.

11. Verfahren zur Herstellung eines Schulterteils vorzugsweise mit Schraub- oder Kronkorkenverschluß für einen Behälter, insbesondere Getränkebehälter, beispielsweise in Form eines Schlauchbeutels, quaderförmigen Packs aus kunststoffbeschichtetem Karton u. a. m., nach einem der Ansprüche 1 bis 10.

12. Verfahren zur Herstellung eines Bodenteils für einen Behälter, insbesondere Getränkebehälter, beispielsweise in Form eines Schlauchbeutels, nach einem der Ansprüche 1 bis 10.

13. Verfahren zur Herstellung eines Behälters, insbesondere Getränkebehälters, mit Barriereeigenschaften, bei dem ein Behältermantel, der aus Kunststoff mit Barriereeigenschaften besteht oder eine Barriereschicht aus Kunststoff aufweist, an ein gemäß Anspruch 11 hergestelltes Schulterteil und/oder ein gemäß Anspruch 12 hergestelltes Bodenteil angesiegelt wird, und zwar vorzugsweise durch Thermosiegeln, Ultraschallschweißen oder Hochfrequenzschweißen.
